# EUROPÄISCHE PATENTANMELDUNG

(11) **EP 1 968 219 A1**
(43) Veröffentlichungstag der Anmeldung: **10.09.2008**
(21) Anmeldenummer: 08000744.6
(22) Anmeldetag: 16.01.2008
(51) Int. Cl.: H04H 40/90, H04N 7/10, H04N 7/20

(54) **Einkabel-Satelliten-Empfangssystem**

(30) Priorität: 08.03.2007 DE 102007011401
(71) Anmelder: Kathrein-Werke KG, 83022 Rosenheim (DE)
(72) Erfinder: Linke, Christian, 83404 Ainring (DE); Ott, Günther, 83569 Vogtareuth (DE); Haslböck, Albert, 83088 Kiefersfelden (DE); Wild, Andreas, 83109 Grosskarolinenfeld (DE)
(74) Vertreter: Flach, Dieter Rolf Paul

(57) **Zusammenfassung**

Ein verbessertes Einkabel-Satelliten-Empfangssystem zeichnet sich durch folgende Merkmale aus:
- es ist für den ersten und für den zweiten Empfangszweig (S1, S2) für jeden Receiver (R1, R2, R3, R4) jeweils ein Frequenzumsetzer (Tuner) vorgesehen, worüber in Abhängigkeit von Steuerbefehlen, die von einem Receiver (R1, R2, R3, R4) abgegeben werden, ein sowohl über die erste Satellitenposition (Sat1) empfangenes Programm als auch ein über die zweite Satellitenposition (Sat2) empfangenes weiteres Programm in dem ersten und in dem zweiten Empfangszweig (S1, S2) in ein dem Receiver (R1, R2, R3, R4) zugeordnetes Frequenzband (FB1, FB2, FB3, FB4) umgesetzt wird, und
- die Umschalteinrichtung (11) ist so aufgebaut und/oder wird so betrieben, dass receiverabhängig nur ein über eine Satellitenposition (Sat1 oder Sat2) über lediglich einen Empfangszweig (S1 oder S2) empfangenes Programm über das dem jeweiligen Receiver (R1, R2, R3, R4) zugeordnete Frequenzband (FB1, FB2, FB3, FB4) in die Einkabel-Leitungsverbindung (5) eingespeist wird.

## Beschreibung

Die Erfindung betrifft ein Einkabel-Satelliten-Empfangssystem nach dem Oberbegriff des Anspruches 1.

Es sind bereits erweiterte Einkabel-Satelliten-Empfangs-Systeme bekannt geworden, bei denen trotz Verwendung einer Einkabel-Leitungsverbindung mehrere Teilnehmer an dieser einzigen Leitung angeschlossen werden können.

Das Prinzip ist dabei derart, dass in einem Einkabel-Konverter (LNB) ein Frequenzumsetzer (nachfolgend teilweise auch Tuner genannt) oder eine vergleichbare Schaltung integriert ist, und zwar entsprechend der Anzahl der maximal anschließbaren Receiver. Für jeden Receiver kann über den ihm zugeordneten Frequenzumsetzer ein gewünschtes Programm auf ein dem jeweiligen Receiver fest zugeordnetes Frequenzband (Bandpass, Kanal) umgesetzt werden. Diese receiverabhängigen Frequenzbänder liegen also versetzt zueinander und werden so in die Einkabel-Leitungsverbindung eingespeist. Die Anzahl der verschiedenen Bandpässe bestimmt somit die Anzahl der möglichen Receiver, die an dieser Einkabel-Leitungsverbindung angeschlossen werden können. Um ein derartiges Einkabelgerät zu steuern, ist ein sogenannter DiSEqC-Befehl notwendig, der die Adresse des Frequenzumsetzers (Tuner), die Bandpassfrequenz und die gewünschte Programmfrequenz beinhaltet. Das gesamte System, das zugehörige Protokoll usw. sind in der Norm En 50494 beschrieben, worauf verwiesen wird.

Zusätzlich ist z.B. aus dem Prospekt "Einkabel-System für Satelliten-Empfangsanlagen" der Firma Kathrein (Prospekt 99810485/0906/20/ZWT/Pf) bekannt, die von einem Satelliten ausgestrahlten und über eine Parabol-Antenne empfangenen Programme in einem LNB so aufzubereiten, dass an dessen vier Ausgängen vier unterschiedliche Frequenzbandbereiche anstehen, nämlich z.B. ein oberes und unteres Frequenzband, welche einmal über eine horizontale Polarisation und zum anderen über eine vertikale Polarisation ausgestrahlt werden.

Diese vier Ausgänge werden über vier Koaxialleitungen mit kaskadierbaren Einkabel-Umschaltmatrix-Schaltungen (Einkabel-Multischalter) verbunden, die mit zusätzlichen Teilnehmer-Ausgängen versehen sind, an denen Einkabel-Leitungsverbindungen abzweigen. An diesen Einkabel-Leitungsverbindungen sind dann beispielsweise zwei oder maximal vier Einzelreceiver (oder zwei Twin-Receiver etc.) anschließbar. Die erwähnten Einkabel-Multischalter umfassen ebenfalls wieder die erwähnten Frequenzumsetzer (Tuner), mit denen die von einem Teilnehmer empfangenen Programme jeweils auf ein dem jeweiligen Teilnehmer zugeordnetes Frequenzband umgesetzt werden.

Die zuletzt erläuterten Systeme sind also allesamt für den Empfang von Programmen ausgelegt, die über eine Satellitenposition empfangen werden. Eine Erweiterung zum Empfang von Programmen, die über eine zweite Satellitenposition ausgestrahlt werden, ist nicht möglich.

Ein breitbandiger Umschalter, mit dem zwischen zwei unterschiedlichen Satelliten umgeschalten werden kann, wie er bei der klassischen Satellitenverteiltechnik bekannt ist, kann im vorliegenden Fall bei einer Einkabellösung nicht verwendet werden, da bei Einkabelsystemen eine Mischsituation entstehen kann, bei der ein Teilnehmer Programme empfangen will, die vom ersten Satelliten ausgestrahlt werden, wohingegen ein anderer Teilnehmer auf demselben Kabel Programme empfangen will, die von einem anderen Satelliten ausgestrahlt werden. Von daher müsste für alle Teilnehmer stets das gesamte von beiden Satelliten empfangene Programmpaket anstehen, wenn die erwähnten mehreren Receiver an einem einzigen Kabel angeschlossen sind.

Ein gattungsbildendes Einkabel-Empfangssystem ist aus der US 2005/0193419 A1 bekannt geworden. Dieses Empfangssystem umfasst einen sogenannten Multi-Schalter, über welchen die angeschlossenen Teilnehmer Programme empfangen können, die über eine erste und eine zweite Satellitenposition ausgestrahlt werden. Die vorgesehene Umschalteinrichtung ist dabei so aufgebaut und/oder wird so betrieben, dass receiverabhängig nur ein über eine Satellitenposition über lediglich einen Empfangszweig empfangenes Signal an einen Frequenzumsetzer weiter gegeben wird.

Allerdings werden in einer derartigen Empfangsanlage keine üblichen Einkabel-Konverter oder Einkabel-Multischalter verwendet.

Eine Satelliten-Empfangsanlage zum Empfang von Signalen, die von einem oder mehreren Satelliten ausgestrahlt werden, ist grundsätzlich auch aus der US 2003/0220072 A1 bekannt geworden. Allerdings handelt es sich hierbei nur um eine Einzel-Empfangsanlage, wie sie üblicherweise in einer sogenannten Home-Empfangsanlage zum Einsatz kommen kann.

Gemäß der US 2006/0018345 A1 können receiverseitig über eine Umschalteinrichtung Signale und Programme empfangen werden, die von einem ersten und zweiten Satelliten ausgestrahlt werden. Die entsprechenden, receiverseitig abgegebenen Steuersignale zum Empfang eines bestimmten Programmes in einer bestimmten Polarität (vertikal oder horizontal) bezüglich eines bestimmten Satelliten führen dazu, dass das entsprechende Transponder-Signal von einem ausgewählten Satelliten und einer bestimmten Polarität in ein bestimmtes Transponder-Band umgesetzt wird, die der Trägerfrequenz des das Programm anfordernden Receivers entspricht.

All die genannten Beispiele zeigen jedoch, dass für die betreffenden Einkabel-Satelitenempfangssysteme jeweils speziell ausgestattete und vorgesehene Receiver notwendig sind, um zwischen den verschiedenen Programmen auswählen zu können, die von verschiedenen Satelliten ausgestrahlt werden.

Aufgabe der vorliegenden Erfindung ist es von daher, eine Lösung, insbesondere für einen Multifeed-Empfang für ein Einkabel-System, an dem zumindest zwei Receiver anschließbar sind, zu schaffen, wobei der Empfang mit zwei üblichen Einkabel-Reiceivern bzw. Einkabel-Konvertern oder Einkabel-Multischaltern möglich sein soll.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Bezüglich der vorliegenden Erfindung wird eine völlig neue Lösung beschrieben, die es erstmals ermöglicht, auch bei Einkabel-Systemen den Satellitenempfang auf einen zweiten Satelliten auszudehnen, und dies ohne nachteilige Beschränkungen oder Einschränkungen für die an der Einkabel-Lösung angeschlossenen Receiver.

Erfindungsgemäß wird dies mit einer komplexen Schaltungsstruktur realisiert.

Dazu ist zunächst, wie bei herkömmlichen Receivern, die an einer Einkabel-Leitungsverbindung angeschlossen sind, vorgesehen, dass von dem betreffenden Receiver aus über eine Befehlsfolge (vorzugsweise über einen DiSEqC-Befehl) ein gewünschtes Programm und damit ein bestimmter Empfangskanal eines Satelliten ausgewählt wird. Im vorliegenden Fall wird jedoch dieser Befehl beiden Einkabel-LNB's oder beiden Einkabel-Umschaltmatrix-Schaltungen zugeführt, so dass somit zwei Programme grundsätzlich für den betreffenden Teilnehmer oder Receiver "bereitgestellt" werden, nämlich je ein Programm pro Satellit.

Über einen dem jeweiligen Teilnehmer oder Receiver zugeordneten Schalter kann bezüglich des dem Teilnehmer oder Receiver zur Verfügung gestellten Frequenzbandes (Bandpass) selektiv eine Umschaltung von dem einen auf den anderen Satelliten durchgeführt werden, so dass hierüber das über den einen oder den anderen Satelliten anstehende Programm empfangen werden kann.

In einer bevorzugten Ausführungsform der Erfindung sind dazu Mehrfachfrequenzweichen vorgesehen, um ein selektives Bearbeiten der Frequenzen zu ermöglichen. D.h. beispielsweise bei Verwendung von zwei Einkabel-LNB's (nämlich je ein Einkabel-LNB zum Empfang der über jeweils einen Satelliten ausgestrahlten Programme) werden die auf die Einkabel-Leitungsverbindung eingespeisten, einem bestimmten Teilnehmer und Receiver zugeordneten Frequenzbänder bzw. Frequenzbereiche (Bandpässe) vorzugsweise über Mehrfachfrequenzweichen in getrennte receiverabhängige Frequenzbänder aufgespalten. Mittels eines bevorzugt über einen Mikroprozessor gesteuerten Schalters kann dann die Umschaltung zwischen den beiden einem jeweiligen Receiver zugeordneten Frequenzbändern erfolgen, an denen jeweils ein ausgewähltes Programm des ersten und des zweiten Satelliten ansteht.

Ferner hat es sich in einer Weiterbildung der Erfindung als günstig erwiesen, einen sogenannten Befehlsfolge-Repeater (vorzugsweise einen DiSEqC-Repeater) zu verwenden. Denn bei Verwendung mehrerer LNB's besteht grundsätzlich die Gefahr, dass beispielsweise nur bei einem angeschlossenen aktiven Receiver die von diesem Receiver eingespeiste Energieversorgung für die mehreren LNB's nicht mehr ausreichend ist. Durch den DiSEqC-Repeater kann eine galvanische Trennung zu den angeschlossenen Receivern bewerkstelligt werden, um eine separate Energieversorgung für die mehreren LNB's vorzusehen.

Die Erfindung kann aber nicht nur bei Verwendung von zwei Einkabel-LNB's (nämlich einem ersten LNB zum Empfang der von dem ersten Satelliten ausgestrahlten Programme und einem zweiten LNB zum Empfang der über den zweiten LNB ausgestrahlten Programme) verwirklicht werden, sondern auch dann, wenn die eingangs erwähnten Einkabel-Umschaltmatrizen (Einkabel-Umschaltmatrix-Schaltungen) verwendet werden. Diese Einkabel-Umschaltmatrizen sind herkömmlichen Quattro-LNB's nachgeordnet, wobei ein herkömmlicher Quattro-LNB zum Empfang des über einen ersten Satelliten ausgestrahlten Programms und das zweite Quattro-LNB zum Empfang des über den zweiten Satelliten ausgestrahlten Programms verwendet wird. Bei den erwähnten Einkabel-Schaltmatrizen kann es sich um kaskadierfähige Einkabel-Schaltmatrizen handeln, die nachfolgend teilweise auch als Einkabel-Multischalter bezeichnet werden. Von diesen Einkabel-Multischaltern geht jeweils eine Einkabel-Leitung aus, die dann wiederum über die erfindungsgemäße komplexe Schaltstruktur mit einer einzigen Einkabel-Leitungsverbindung zusammengefasst wird, um den daran angeschlossenen Receivern die Möglichkeit zu geben, Programme von beiden Satelliten empfangen zu können.

Die Erfindung bietet zudem den weiteren Vorteil, das sie problemlos im Zusammenhang mit einer terrestrischen Antenne benutzt werden kann. Die terrestrische Antenne kann nämlich im Rahmen der Erfindung die hierüber empfangenen Signale und Programme auf die Einkabel-Leitung einspeisen.

Die Erfindung wird nachfolgend anhand von Zeichnungen für mehrere Ausführungsbeispiele erläutert. Dabei zeigen im Einzelnen:
- Figur 1:: eine schematische Grunddarstellung zur Erläuterung des erfindungsgemäßen Prinzips;
- Figur 2:: ein Beispiel für die komplexe Schaltungs-struktur unter Verwendung von HF-Schaltern;
- Figur 3:: ein Gesamtschaltplan unter Verwendung von zwei Einkabel-LNB's (zum Empfang von zwei Programmen, die über zwei getrennte Satelliten ausgestrahlt werden), die eine erfindungsgemäße komplexe Schaltungsstruktur bilden, wobei die beiden Ausgänge der beiden LNB's letztlich mit einer Einkabel-Leitungsverbindung verbunden sind, an der mehrere Teilnehmer angeschlossen sind; und
- Figur 4:: ein zu Figur 3 abgewandeltes Ausführungsbeispiel unter Verwendung von Einkabel-Umschaltmatrizen.

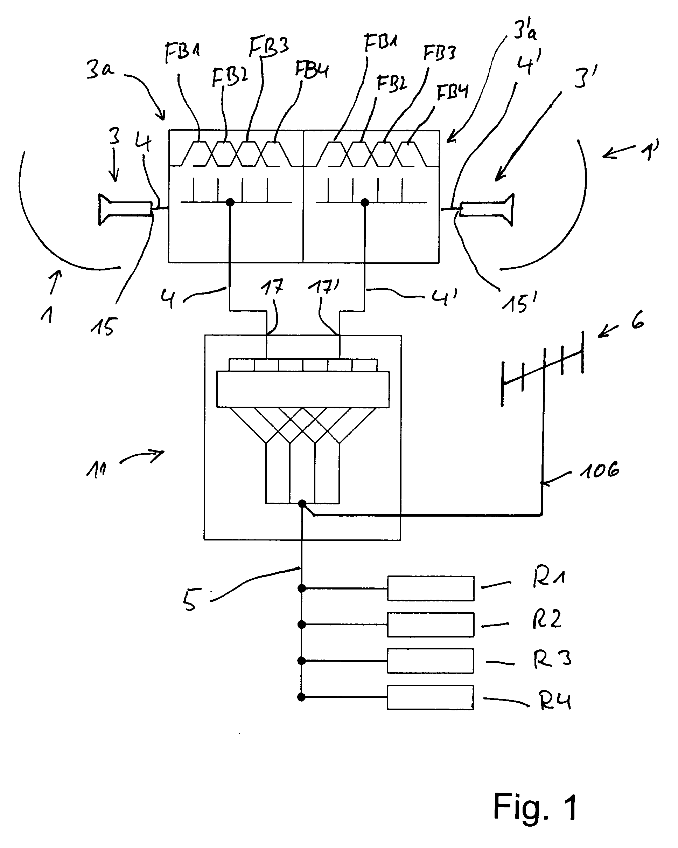

In Figur 1 ist in schematischer Darstellung der Grundaufbau eines erfindungsgemäßen Einkabel-Satelliten-Empfangssystems gezeigt.

Dazu sind in Figur 1 schematisch zwei Parabolspiegel 1 und 1' dargestellt. Beispielsweise können über den ersten Parabolspiegel 1 die von einem ersten Satelliten ausgestrahlten Programme und über den zweiten Parabolspiegel 1' die über einen zweiten Satelliten ausgestrahlten Programme empfangen werden.

Jedem dieser beiden Parabolspiegel 1 und 1' ist ein Konverter (nachfolgend kurz auch LNB genannt) 3 bzw. 3' zugeordnet, nämlich ein sogenannter Einkabel-LNB, über den vorzugsweise die vertikal sowie horizontal polarisiert ausgestrahlten Programme beispielsweise in einem oberen und unteren Frequenzband empfangen werden können, wobei jeder der beiden Einkabel-LNB's 3, 3' über eine Leitung 4 bzw. 4' mit einer nachfolgend noch erörterten komplexen Schalteinrichtung verbunden ist.

In der Praxis wird häufig nur ein einziger Parabolspiegel 1 verwendet, vor dem in sogenannter "schielender" Anordnung die versetzt zueinander liegenden Speisesysteme mit den nachfolgenden Konvertern 3 und 3' positioniert sind, so dass letztlich über den gleichen Parabolspiegel die von zwei unterschiedlichen Satelliten ausgestrahlten Programme empfangen werden können (Mulitfeed-Empfang).

In Figur 1 ist schematisch angedeutet, dass beispielsweise vier Receiver R1 bis R4 an einer Einkabel-Leitungsverbindung 5 angeschlossen sind oder sein können, die wahlweise Programme vom ersten oder zweiten Satelliten in einem oberen und einem unteren Frequenzband empfangen können, die vertikal oder horizontal polarisiert ausgestrahlt werden.

Beide Einkabel-LNB's 3, 3' umfassen einen sogenannten Frequenzumsetzer (Tuner), d.h. für jeden der Receiver R1 bis R4 ist ein entsprechender Frequenzumsetzer (Tuner) vorgesehen ist. Dieser ermöglicht, dass das von einem Teilnehmer oder Receiver R1 bis R4 gewünschte Programm auf einem dem Receiver fest zugeordneten Frequenzbereich oder Frequenzband (Bandpass) FB1 bis FB4 umgesetzt wird.

Dazu sind in der schematischen Box 3a bzw. 3'a angedeutet, wie die über ein Speisesystem empfangenen Programme in vier versetzt zueinander liegenden Bandpässe (Frequenzbänder) FB1 bis FB4 in jedem LNB 3 bzw. 3' umgesetzt werden.

Die Anzahl der verschiedenen zusammengefassten Bandpässe bestimmt dabei die Anzahl der möglichen Receiver auf einem Kabel 5. In dem nachfolgend im Detail noch weiter beschriebenen Ausführungsbeispiel wird dabei davon ausgegangen, dass beispielsweise eine Umsetzung in vier Bandpässe (Frequenzbänder) FB1 bis FB4 möglich ist. Die Erfindung ist aber genauso anwendbar, wenn eine Umsetzung beispielsweise in zwei oder drei Frequenzbänder möglich wäre. Ebenso ist eine Realisierung der Erfindung für den Fall möglich, dass eine Umsetzung in mehr als vier Frequenzbänder, beispielsweise in acht Frequenzbänder (oder sogar noch mehr) möglich ist, beispielweise bei Verwendung von entsprechend konfigurierten Einkabel-Konvertern oder entsprechend konfigurierten Einkabel-Multischaltern.

Dabei ist in Figur 1 auch schon ergänzend angeordnet, dass die erfindungsgemäße Einkabel-Lösung auch im Zusammenhang mit einer zusätzlich vorgesehenen terrestrischen Antenne 6 realiserbar ist. Diese terrestrische Antenne 6 ist beispielsweise über eine Antennenleitung 106 mit der Einkabel-Leitungsverbindung 5 verbunden, worüber die Receiver nicht mehr die über die Satellitenantenne empfangenen Programme, sondern auch die terrestrisch ausgestrahlten Programme empfangen können. Dabei werden die terrestrisch empfangenen Programme in einen von den umgesetzten Bandpässen FB1 bis FB4 abweichenden Frequenzbereich eingespeist.

Um eine Einkabel-Lösung zu ermöglichen, ist es grundsätzlich notwendig, dass die Receiver R1 bis R4 eine geeignete Befehlsfolge zur Steuerung der LNB's sowie der Frequenzumsetzer (Tuner) ausgeben können. Für diese Befehlsfolge wird üblicherweise ein sogenannter DiSEqC-Befehl verwendet, der die kodierte Information für die Adresse des jeweiligen Frequenzumsetzers (Tuner), die Information bezüglich der den einzelnen Receivern R1 bis R4 zugeordneten Bandpassfrequenz und die Information bezüglich der gewünschten Programmfrequenz für den betreffenden Teilnehmer beinhaltet. Der Grundaufbau des Systems und das Protokoll usw. sind in der Norm En 50494 beschrieben.

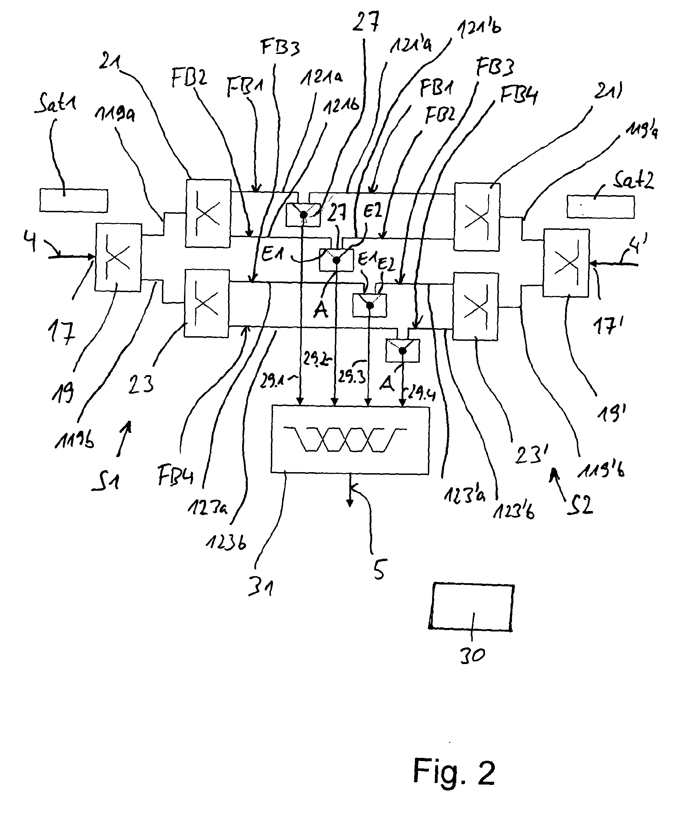

Um die einzelnen Programme nicht nur bezüglich des über einen Satelliten ausgestrahlten Programms, sondern auch bezüglich des über den zweiten Satelliten ausgestrahlten Programms empfangen zu können, ist bei der vorliegenden Erfindung eine sogenannte intelligente oder komplexe Schalteinrichtung 11 vorgesehen, die in Figur 1 angedeutet ist und deren weiterer Aufbau vom Grundsatz her aus Figur 2 hervorgeht.

Aus Figur 1 und Figur 2 ist zu entnehmen, dass von jedem LNB 3 und 3' jeweils eine Einkabel-Leitungsverbindung 4, 4', üblicherweise in Form eines Koaxialkabels, von einem Ausgang 15 bzw. 15' des zugehörigen LNB's 3, 3' ausgeht zu je einem Eingang 17, 17' der nachgeordneten komplexen Schalteinrichtung 11 führt, wobei diese komplexe Schaltungsanordnung 11 nunmehr im größeren Detail anhand von Figur 2 erläutert wird.

Die Schaltungseinrichtung 11 ist dabei so aufgebaut, dass das von jedem LNB beispielsweise von einem Sat1 bis Sat2 (in Figur 2 nur schematisch angeordnet) empfangene und pro angeschlossenem Teilnehmer oder Receiver R1 bis R4 ausgewählte Programm in ein bestimmtes Frequenzband FB1 bis FB4 umgesetzt und über nachgeordnete im gezeigten Ausführungsbeispiel kaskadierte Frequenzweichen aufgespalten wird, derart, dass für jeden Teilnehmer oder Receiver R1 bis R4 das jeweils zugeordnete Frequenzband FB1 bis FB4 separat ansteht.

Dazu ist im gezeigten Ausführungsbeispiel der Eingang 17 der komplexen Schalteinrichtung 11 mit einer ersten Frequenzweiche 19 verbunden, worüber beispielsweise über den oberen Zweig 119a die Frequenzbereiche FB1 und FB2 und über den unteren Zweig 119b die Frequenzbänder FB3 und FB4 eingespeist werden.

Über die beiden nachgeordneten Frequenzweichen 21 und 23 werden die an deren Eingang zugeführten Frequenzbänder nochmals aufgespalten, nämlich über die erste Frequenzweiche 21 der Frequenzbereich FB1 in einen oberen Zweig 121a und der Frequenzbereich FB2 in einen unteren Zweig 121b. Ebenso erfolgt eine Aufspaltung in der zweiten Frequenzweiche 23 in einen oberen Zweig 123a beispielsweise für das Frequenzband FB3 und in einen unteren Zweig 123b für das untere Frequenzband FB4.

Der Aufbau ist symmetrisch für den zweiten Empfangszweig zum Empfang der über den zweiten Satelliten ausgestrahlten Programme aufgebaut, nämlich mit einer ersten Frequenzweiche 19', an deren Ausgang eine entsprechende Aufteilung in die verschiedenen Frequenzbänder erfolgt, wobei die beiden Ausgänge der Frequenzweiche 19' mit den beiden Eingängen der beiden nachgeschalteten Frequenzweichen 21' und 23' verbunden sind, so dass auch hier die vier Frequenzbänder zumindest von den über den zweiten Satelliten ausgestrahlten Programmen über die beiden Zweige 119'a und 119'b letztlich in die vier Zweige 121'a und 121'b, 123'a und 123'b aufgeteilt werden.

Die jeweils für eine Teilnehmer oder Receiver R1 bis R4 vorgesehenen Frequenzbänder führen nunmehr zu zwei Eingängen E1 bzw. E2 an einem 2:1 HF-Schalter 30. Die vier Ausgänge A an den vier HF-Schaltern 30 (die jeweils für einen Teilnehmer oder Receiver R1 bis R4 vorgesehen sind) sind über je eine Ausgangsleitung 29.1 bis 29.4 über eine Frequenzweichen-Anordnung oder einen Combiner 31 mit der Einkabel-Leitungsverbindung 5 verbunden, die zu den angeschlossenen Receivern R1 bis R4 führt. Durch diesen Aufbau wird also (bezugnehmend auf Figur 2) ein sogenannter Empfangszweig S1 bzw. S2 geschaffen, nämlich der Empfangszweig S1 zum Empfang der über den Satelliten Sat1 ausgestrahlten Programme und der Empfangszweig S2 zum Empfang der über den Satelliten S2 empfangenen Programme.

Die grundsätzliche Funktionsweise ist dabei folgendermaßen.

In bekannter Weise wird mittels eines Receivers R1 bis R4 jeweils von einem Teilnehmer ein gewünschtes Programm ausgewählt, das er empfangen will. Wie beim herkömmlichen Empfang von lediglich von einem einzigen Satelliten ausgestrahlten Programmen wird dabei im Rahmen der geschilderten Einkabel-Lösung von dem betreffenden Receiver ein entsprechender Steuerungsbefehl, ein sogenannter DiSEqC-Befehl abgegeben, worüber der entsprechende LNB 3 bzw. 3' einschließlich des zugehörigen Frequenzumsetzers (Tuner) das gewählte Programm in einen dem betreffenden Receiver zugeordneten Frequenzbereich (d. h. Frequenzband oder Bandpass) umsetzt und in die Einkabel-Leitungsverbindung 5 einspeist.

Im gezeigten Ausführungsfall würde durch den entsprechenden Steuerungs- bzw. DiSEqC-Befehl die entsprechende Programmauswahl symmetrisch für die über beide Satelliten empfangenen Programme erfolgen, so dass an den beiden Eingängen E1 und E2 eines jeweiligen einem bestimmten Receiver R1 bis R4 zugeordneten HF-Schalters 27 die dem jeweiligen DiSEqC-Befehl zugeordneten Programme zum Empfang anstehen.

Da der Steuerungs- und/oder DiSEqC-Befehl des Teilnehmers eine Information bezüglich der Satelliten-Position umfasst, kann diese Information verwendet werden, um den HF-Schalter 27 so umzuschalten, dass abhängig von dieser Information bezüglich der Satelliten-Position der angeschlossene Teilnehmer wunschgemäß entweder das vom ersten oder alternativ das vom zweiten Satellit ausgestrahlte Programm empfangen kann, also entweder das vom ersten Einkabel-LNB 3 oder das vom zweiten Einkabel-LNB 3' aufbereitete und zur Verfügung gestellte Programm empfängt.

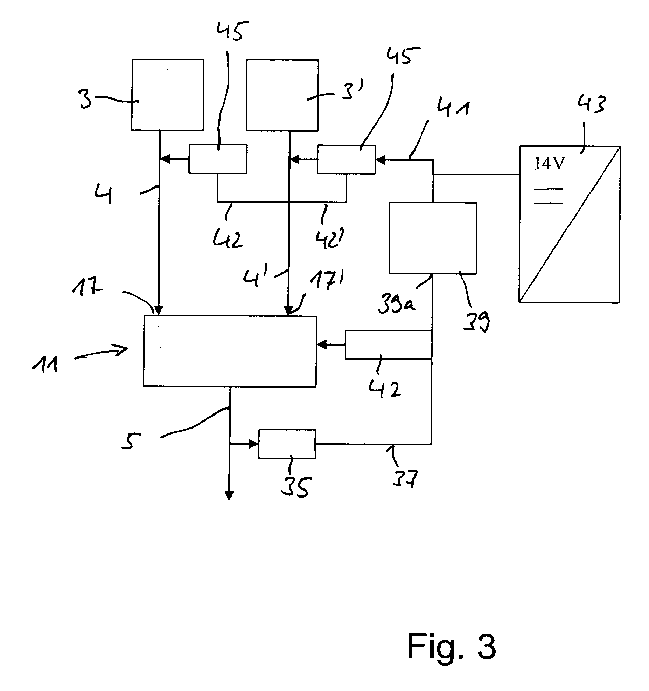

Das jeweils vom Teilnehmer ausgewählte Programm wird dann über den Ausgang A des zugehörigen HF-Schalters 27 und den nachgeordneten Combiner 31 in die Einkabel-Leitungsverbindung 5 (üblicherweise in Form eines Koaxialkabels) eingespeist, und zwar in Form von versetzt zueinander liegenden Frequenzbändern FB1 bis FB4. Bereits an dieser Stelle wird angemerkt, dass bei einem derartigen Aufbau die Empfangsanlage sogar erweitert werden kann, dahingehend, dass über zusätzliche LNB's und gegebenenfalls über zusätzliche Parabolspiegel oder allgemein Antennen auch noch Programme anderer Satelliten empfangen werden können. In diesem Fall muss der Aufbau entsprechend erweitert werden und der jeweils einem bestimmten Receiver zugeordnete Bandpass einem HF-Schalter zugeführt werden, der eine der Anzahl der empfangbaren Satelliten entsprechende Anzahl von Eingängen aufweist, zwischen denen der angeschlossene Teilnehmer oder Receiver umschalten kann. Es ist lediglich erforderlich, eine Befehlsfolge zu verwenden, die eine Information bezüglich der Auswahl des gewünschten Satelliten beinhaltet. Die erwähnten Schalter 27 werden bevorzugt mittels eines Mikrocontrollers 30 entsprechend geschaltet, der in Figur 3 nur schematisch angedeutet ist.

Anstelle der geschilderten Frequenzweichen kann die Aufteilung in den, den einzelnen Receivern zugeordneten Frequenzbänder, auch anders vorgenommen werden, beispielsweise nicht durch einen zweistufigen, sondern nur durch einen einstufigen Aufbau, unter Verwendung von Bandpassfiltern etc. Einschränkungen auf bestimmte Umsetzungen des erfindungsgemäßen Lösungsgedankens bestehen insoweit nicht.

Da im vorliegenden Fall zumindest zwei LNB's 3, 3' gleichzeitig in Betrieb sein können, kann dies dazu führen, dass der von beiden LNB's verursachte Stromverbrauch dann zu groß wäre, wenn beispielsweise nur ein Receiver angeschlossen oder in Betrieb wäre.

Von daher ist zusätzlich eine entsprechende Stromversorgungsschaltung vorgesehen, wie sie anhand von Figur 3 erläutert wird.

In Figur 3 ist der in Figur 1 und in Figur 2 wiedergegebene intelligente oder komplexe Schalter 11 als Blackbox eingezeichnet.

Bei einer Einkabel-Leitung ist herkömmlicherweise im Stand der Technik vorgesehen, dass der Einkabel-LNB über den zumindest einen angeschlossenen Receiver mit Gleichspannung (Strom) versorgt wird.

Anhand von Figur 3 ist demgegenüber die erfindungsgemäße Lösung beschrieben, bei welcher die von zumindest einem angeschlossenen Receiver eingespeiste Gleichspannungs-Stromversorgung über eine in Figur 3 gezeigte Gleichspannungs-Auskopplung 35 von der Einkabel-Leitungsverbindung 5 ausgekoppelt wird.

Gleichzeitig ist in Figur 3 auch angedeutet, dass über eine Zweigleitung 37 (die Teil der komplexen Schaltungseinrichtung 11 sein kann oder in der Regel ist) die Befehlsfolgen der angeschlossenen Receiver (in der Regel in Form eines DiSEqC-Befehls) zur Schaltung der komplexen Schaltungseinrichtung 11, wie anhand von Figur 2 erläutert, verwendet werden. Die DiSEqC-Befehlsfolge, die über die Zweigleitung 37 von den Receivern weitergeleitet wird, dient also zur Steuerung der komplexen Schalteinrichtung 11, wobei die DiSEqC-Steuerung vom Prinzip her mit dem Bezugszeichen 42 schematisch wiedergegeben ist.

Zusätzlich ist ein sogenannter DiSEqC-Repeater, also allgemein ein Befehls-Repeater 39, vorgesehen, der eine gleichstrommäßige (galvanische) Trennung zwischen den LNB's 3, 3' und den Receivern R1 bis R4 erzeugt. Er dient zudem dazu, die auf der Receiverseite an seinem Eingang 39a von den Receivern erhaltenen DiSEqC- oder allgemeinen die Befehlsfolgen über die Gleichstrom-Trennung (also die galvanische Trennung) hinweg erneut zu generieren und über die Steuerungsstrecke 41 den beiden LNB's 3 und 3' über entsprechende Zweigleitungen 42 und 42' zuzuführen. Mit anderen Worten kann jeder Steuerungs- oder DiSEqC-Befehl von jedem Receiver über den erwähnten Befehls-Repeater 39 den beiden LNB's zur Auswahl eines bestimmten Programms zugeführt werden, so als ob bei einer herkömmlichen Einsatelliten-Einkabel-Lösung die DiSEqC-Befehle direkt an LNB's übermittelt werden würden.

Auf der Ausgangsseite des Repeaters 39b ist dann noch eine separate, ausreichend groß dimensionierte Energieversorgungseinheit 43 angeschlossen, mittels der beispielsweise die für den Betrieb der LNB's benötigte übliche Spannungsversorgung, d. h. insbesondere Gleichspannungs-Versorgung von beispielsweise 14 Volt, zur Verfügung gestellt wird.

Die Gleichspannungs-Versorgung ist dabei für die beiden LNB's mit dem Bezugszeichen 45 schematisch angedeutet.

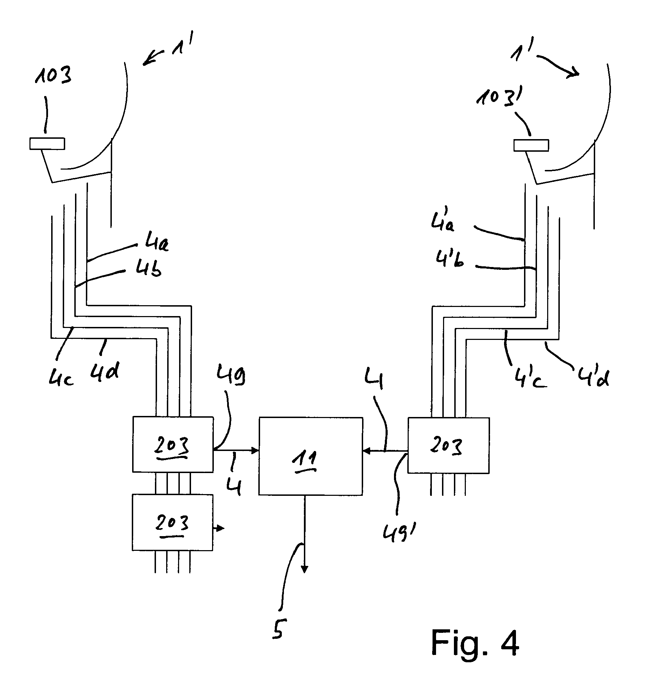

Anhand von Figur 4 ist schematisch gezeigt, dass im Rahmen der erfindungsgemäßen Einkabel-Satelliten-Empfangsanlage die an einer Einkabel-Leitungsverbindung 5 angeschlossenen einzelnen Receiver (beispielsweise Receiver R1 bis R4) mit einer vergleichbaren intelligenten oder komplexen Schalteinrichtung 11 Programme empfangen können, die von einem ersten sowie von einem zweiten Satelliten ausgestrahlt werden und dabei in Abweichung zum Ausführungsbeispiel gemäß Figur 1 über Einkabel-Multischalter empfangen werden können.

In diesem Ausführungsbeispiel gemäß Figur 4 wird also kein Einkabel-LNB mit lediglich einem einzigen Ausgang, sondern herkömmliche LNB's, d.h. sogenannte Quattro-LNB's verwendet, die beispielsweise vier Ausgänge haben, an denen fest eingestellt vier unterschiedliche Empfangsbänder in die nachfolgenden vier Leitungen 4a bis 4d bzw. 4'a bis 4'd eingespeist werden, beispielsweise die Programme, die vertikal polarisiert in einem unteren Frequenzband, horizontal polarisiert in einem unteren Frequenzband, vertikal polarisiert in einem oberen Frequenzband bzw. horizontal polarisiert in einem oberen Frequenzband ausgestrahlt werden.

Die nachgeschalteten Einkabel-Umschaltmatrix-Schaltungen 203, 203' weisen eine entsprechende Anzahl von Eingängen 47a und Ausgängen 47b auf und sind bevorzugt kaskadierbar aufgebaut, so dass eine zweite oder weitere Einkabel-Umschaltmatrize nachschaltbar ist.

Jede dieser Einkabel-Umschaltmatrizen 203, 203' weist zumindest einen receiverseitigen Empfangsausgang 49, 49' auf, an dem wiederum eine Einkabel-Leitungsverbindung 4 und 4' angeschlossen ist, vergleichbar der Einkabel-Leitungsverbindung 4 und 4' bei dem Ausführungsbeispiel nach Figur 1 bis 3.

Die Einkabel-Multischalter umfassen dabei ebenfalls wieder entsprechend der Anzahl der maximal anschließbaren Teilnehmer einen Frequenzumsetzer (Tuner), worüber ein von einem angeschlossenen Receiver (Teilnehmer) ausgewähltes Programm auf einen diesem Receiver oder Teilnehmer zugeordnetes Frequenzband oder eine ihm zugeordnete Frequenz umgesetzt und in die Einkabel-Verbindung eingespeist wird.

Der in den Figuren 1 bis 3 erläuterte komplexe Schalter 11 ist ähnlich aufgebaut und erlaubt es auch bei diesem Ausführungsbeispiel, dass die einzelnen Receiver auswahlmäßig bestimmte Programme empfangen können, die von dem ersten oder von dem zweiten Satelliten ausgestrahlt werden.

So sind in diesem Ausführungsbeispiel die Einkabel-Umschaltmatrixen 203, 203' entweder mit einer integrierten Spannungs- und Energieversorgung versehen oder an deren kaskadierfähigen Ausgängen ist eine zusätzliche in Figur 4 nicht wiedergegebene Spannungsversorgung angeschlossen, so dass auf eine separate Energieversorgung 43 vergleichbar im Ausführungsbeispiel nach Figur 3 bei der Variante gemäß Figur 4 verzichtet werden kann.

Die Besonderheit bei dem Ausführungsbeispiel gemäß Figur 4 ist, dass dort beispielsweise ein Multifeed unter Verwendung von zwei Schaltmatrizen möglich ist, bei der acht Satelliten-Empfangsebenen (also jeweils vier Empfangsebenen pro Satellit) empfangbar sind, obgleich in der Einkabel-Leitungsverbindung 5, die zu den Receivern führt, nur vier Empfangsebenen eingespeist werden. Könnten beispielsweise in der Einkabel-Leitungsverbindung 13 doppelt so viele, versetzt zueinander liegende Frequenzbänder eingespeist werden, nämlich z.B. Frequenzbänder FB1 bis FB8, wobei jeweils zwei versetzt zueinander liegende Frequenzbänder einem einzigen Receiver zugeordnet werden, könnten die beiden Ausgänge der beiden Schaltmatrizen auf eine gemeinsame Einkabel-Leitungsverbindung 5 zusammengeschaltet werden, wobei z.B. von der ersten Schaltmatrix Frequenzpässe FB1 bis FB4 zum Empfang der über den ersten Satelliten ausgestrahlten Programme und von der zweiten Schaltmatrix z.B. Bandpässe FB5 bis FB8 zum Empfang der über den zweiten Satelliten ausgestrahlten Programme eingespeist werden, die dann von den beispielsweise maximal vier Receivern empfangbar sind.

Die erwähnten Empfangsebenen können auch dazu dienen, beispielsweise in einem sogenannten High- oder Low-Band analoge oder digitale Programme, insbesondere Fernseh- und Rundfunkprogramme zu empfangen. Die Empfangsebenen sind insoweit unterschiedlich konfigurierbar.

Die Erfindung ist anhand von Multischaltern beschrieben worden, die beispielsweise eine Umsetzung in vier Frequenzbänder (vier Bandpässe) erlaubt. Es können grundsätzlich aber auch Einkabel-Konverter oder Multischalter verwendet werden, die eine Umsetzung in weniger als vier (beispielsweise nur zwei oder drei) Bandpässe oder aber auch in mehr als vier Bandpässe ermöglichen, beispielweise in bis zu acht Bandpässe (und noch mehr).

## Patentansprüche

1. Einkabel-Satelliten-Empfangssystem mit folgenden Merkmalen:
- es sind zumindest zwei Receiver (R1, R2, R3, R4) vorgesehen, die an einer Einkabel-Leitungsverbindung (5) angeschlossen und/oder anschließbar sind,
- für jeden Receiver (R1, R2, R3, R4) ist ein Frequenzumsetzer (Tuner) vorgesehen, der in einem vorgeschalteten Einkabel-Konverter (3, 3') oder in einer vorgeschalteten Einkabel-Umschaltmatrix oder einem Einkabel-Multischalter (203, 203') ein gewünschtes Programm in ein einem jeweiligen Receiver (R1, R2, R3, R4) zugeordnetes Frequenzband (Bandpass) umsetzt und in die Einkabel-Leitungsverbindung (5) einspeist,
- der Frequenzumsetzer (Tuner) ist über eine teilnehmerseitige Befehlsfolge, insbesondere in Form eines DiSEqC-Befehls, steuerbar,
- mit den zumindest beiden Receivern (R1, R2, R3, R4) sind Programme empfangbar, die über eine erste und eine zweite Satellitenposition (Sat1, Sat2) ausgestrahlt werden,
- ein erster Empfangszweig (S1) ist zum Empfang der über die erste Satellitenposition (Sat1) ausgestrahlten Programme und ein zweiter Empfangszweig (S2) ist zum Empfang der über die zweite Satellitenposition (Sat2) ausgestrahlten Programme vorgesehen,
- es ist ferner eine Umschalteinrichtung (11) vorgesehen,
- die Umschalteinrichtung (11) ist so aufgebaut und/oder wird so betrieben, dass receiverabhängig nur ein über eine Satellitenposition (Sat1 oder Sat2) über lediglich einen Empfangszweig (S1 oder S2) empfangenes Signal an einen Frequenzumsetzer (Tuner) weitergegeben wird,
**gekennzeichnet durch** die folgenden weiteren Merkmale:
- es ist für den ersten und für den zweiten Empfangszweig (S1, S2) für jeden Receiver (R1, R2, R3, R4) jeweils ein Frequenzumsetzer (Tuner) vorgesehen, worüber in Abhängigkeit von Steuerbefehlen, die von einem Receiver (R1, R2, R3, R4) abgegeben werden, ein sowohl über die erste Satellitenposition (Sat1) empfangenes Programm als auch ein über die zweite Satellitenposition (Sat2) empfangenes weiteres Programm in dem ersten und in dem zweiten Empfangszweig (S1, S2) in ein dem Receiver (R1, R2, R3, R4) zugeordnetes Frequenzband (FB1, FB2, FB3, FB4) umgesetzt wird, und
- die Umschalteinrichtung (11) ist so aufgebaut und/oder wird so betrieben, dass receiverabhängig nur ein über eine Satellitenposition (Sat1 oder Sat2) über lediglich einen Empfangszweig (S1 oder S2) empfangenes Programm über das dem jeweiligen Receiver (R1, R2, R3, R4) zugeordnete Frequenzband (FB1, FB2, FB3, FB4) in die Einkabel-Leitungsverbindung (5) eingespeist wird.

2. Einkabel-Satelliten-Empfangssystem nach Anspruch 1, **dadurch gekennzeichnet, dass** in jedem Satelliten-Empfangszweig (S1, S2) eine frequenzabhängige Einspeisung der verschiedenen receiverabhängigen Frequenzbänder (FB1, FB2, FB3, FB4) in Zweigleitungen (121a, 121b, 123a, 123b; 121'a, 121'b, 123'a, 123'b) vorgesehen ist, die mit jeweils einem Eingang (E1, E2) eines für das betreffende Frequenzband (FB1, FB2, FB3, FB4) vorgesehenen Umschalters (27) in Verbindung stehen, wobei die Umschalter (27) in Abhängigkeit eines vom betreffenden Receiver (R1, R2, R3, R4) abgegebenen Steuerbefehls zur Auswahl eines Programms zusätzlich so umschaltbar sind, dass an dem Ausgang (A) des betreffenden Umschalters (27) nur ein Programm in die nachgeordnete Einkabel-Leitungsverbindung (5) eingespeist wird, welches entsprechend der Befehlsfolge des Receivers (R1, R2, R3, R4) durch entsprechende Umschaltung des Umschalters (27) ausgewählt wird.

3. Einkabel-Satelliten-Empfangssystem nach Anspruch 1 oder 2, **dadurch gekennzeichnet, dass** die Umschalteinrichtung (11) mikroprozessorgesteuert ist.

4. Einkabel-Satelliten-Empfangssystem nach einem der Ansprüche 1 bis 3, **dadurch gekennzeichnet, dass** die Umschalteinrichtung (11) hardwaremäßig aufgebaut ist.

5. Einkabel-Satelliten-Empfangssystem nach einem der Ansprüche 1 bis 4, **dadurch gekennzeichnet, dass** in jedem Satelliten-Empfangszweig (S1, S2) ein Ein-Kabel-LNB (3, 3') vorgesehen ist, der über eine Ein-Kabel-Verbindung (4, 4') mit der Umschalteinrichtung (11) verbunden ist.

6. Einkabel-Satelliten-Empfangssystem nach einem der Ansprüche 1 bis 4, **dadurch gekennzeichnet, dass** in jedem Satelliten-Empfangszweig (S1, S2) Einkabel-Multischalter (203, 203') vorgesehen sind, die mit zumindest einem teilnehmerseitigen Empfängerausgang (49, 49') versehen sind, worüber receiverabhängig die von einem Receiver ausgewählten Programme in einem für den jeweiligen Receiver vorgesehenen Frequenzband (FB1, FB2, FB3, FB4) in eine Einkabel-Leitung (4, 4') eingespeist werden, die mit den beiden Eingängen der nachgeordneten Umschalteinrichtung (11) verbunden sind.

7. Einkabel-Satelliten-Empfangssystem nach einem der Ansprüche 1 bis 6, **dadurch gekennzeichnet, dass** ferner ein Befehls-Repeater (39) vorgesehen ist, der zwischen den Satelliten-Empfangszweigen (S1, S2) und der Einkabel-Leitungsverbindung (5) parallel zur Umschalteinrichtung (11) geschaltet ist und dabei die Einkabel-Leitungsverbindung (5) und die Satelliten-Empfangszweige (S1, S2) galvanisch trennt, wobei ein von einem angeschlossenen Receiver (R1, R2, R3, R4) in die Einkabel-Leitungsverbindung (5) eingespeister Steuerbefehl in den Befehls-Repeater (39) erfasst, intern neu generiert und in die Satelliten-Empfangszweige (S1, S2) für die dort vorgesehenen Konverter (3, 3') neu eingespeist wird.

8. Einkabel-Satelliten-Empfangssystem nach einem der Ansprüche 1 bis 7, **dadurch gekennzeichnet, dass** ferner eine separate Energieversorgungseinheit (43) vorgesehen ist, die mit dem jeweiligen Satelliten-Empfangszweig (S1, S2) zwischen dem Befehls-Repeater (39) und den Konvertern (3, 3') verbunden ist.

9. Einkabel-Satelliten-Empfangssystem nach einem der Ansprüche 2 bis 8, **dadurch gekennzeichnet, dass** die LNB's (3, 3') und die den einzelnen Receivern (R1, R2, R3, R4) zugeordneten Umschalter (27) über einen DiSEqC-Befehl steuerbar sind.

10. Einkabel-Satelliten-Empfangssystem nach einem der Ansprüche 2 bis 9, **dadurch gekennzeichnet, dass** die Ausgänge (A) der Umschalter (27) über einen Combiner (31) mit der Einkabel-Leitungsverbindung (5) verbunden sind.

11. Einkabel-Satelliten-Empfangssystem nach einem der Ansprüche 2 bis 10, **dadurch gekennzeichnet, dass** die Umschalter (27) über einen Mikroprozessor (30) steuerbar sind.

12. Einkabel-Satelliten-Empfangssystem nach einem der Ansprüche 1 bis 11, **dadurch gekennzeichnet, dass** mittels des Frequenzumsetzers (Tuner) vorzugsweise in einem vorgeschalteten Einkabel-Konverter (3, 3') oder vorzugsweise in einer vorgeschalteten Einkabel-Umschaltmatix (33, 33') eine Umsetzung in zumindest zwei versetzt zueinander liegende Frequenzbänder oder Bandpässe (FB1, FB2) durchführbar ist.

13. Einkabel-Satelliten-Empfangssystem nach Anspruch 12, **dadurch gekennzeichnet, dass** mittels des Frequenz-Umsetzers (Tuner) eine Frequenzumsetzung in zumindest vier Frequenzbänder (FB1, FB2, FB3, FB4) durchführbar ist.

14. Einkabel-Satelliten-Empfangssystem nach Anspruch 12 oder 13, **dadurch gekennzeichnet, dass** mittels des Frequenz-Umsetzers (Tuner) eine Umsetzung in zumindest acht Frequenzbänder (Bandpässe) durchführbar ist.
